# EUROPEAN PATENT SPECIFICATION

(11) **EP 1 430 972 B1**
(45) Date of publication and mention of the grant of the patent: **11.04.2007**
(21) Application number: 02800273.1
(22) Date of filing: 27.09.2002
(51) Int. Cl.: B21F 15/08, C03B 13/12, C03C 14/00, B21F 27/22, B21F 27/10, B23K 11/00

(54) **WIRE FOR WIRED SHEET GLASS AND METHOD OF MANUFACTURING THE WIRE**
DRAHT FÜR MIT DRÄHTEN VERSEHENE GLASFLÄCHE UND VERFAHREN ZUR HERSTELLUNG DES DRAHTS
FIL POUR VITRE ARMEE EN FEUILLE ET SON PROCEDE DE FABRICATION

(30) Priority: 28.09.2001 JP 2001300450
(43) Date of publication of application: 23.06.2004
(73) Proprietor: Asahi Glass Co., Ltd., Tokyo 100-8405 (JP); MATSUI WIRE NETTING INDUSTRY CO., LTD., Takaishi-shi, Osaka 592-0001 (JP)
(72) Inventor: HARADA, Shinichi c/o Asahi Glass Co., Ltd., Kashima-gun, Ibaraki 314-0102 (JP); ARAI, Daikichi c/o Asahi Glass Co., Ltd., Sumida-ku, Tokyo 130-0013 (JP); MATSUI, Takayoshi c/o Matsui Wire Netting, Takaishi-shi, Osaka 592-0001 (JP); DOI, Naoyuki c/o Matsui Wire Netting,Industry Co.,, Takaishi-shi, Osaka 592-0001 (JP); OKINO, Naoki c/o Asahi Glass Machinery Co., Ltd., Chiyoda-ku, Tokyo 101-0047 (JP); ITO, Junya c/o Asahi Glass Co., Ltd., Yokohama-shi, Kanagawa 230-0045 (JP); TODA, Tsumoru c/o Asahi Glass Co., Ltd., Yokohama-shi, Kanagawa 230-0045 (JP)
(74) Representative: Müller-Boré & Partner Patentanwälte
(86) International application number: PCT/JP2002/010084
(87) International publication number: WO 2003/028919

(56) References cited:
- WO-A-01/77039
- GB-A- 263 921
- JP-A- 1 044 234
- JP-A- 5 177 288
- JP-A- 9 085 372
- JP-A- 52 113 358
- JP-A- 62 151 237
- US-A- 1 842 120
- US-A- 1 922 270

## Description

### TECHNICAL FIELD

The present invention relates to a process for producing a mesh for a wired glass and a wired glass, see e.g. WO 01/77039A1.

### BACKGROUND ART

There has been widely used a wired glass such as a rhombus-meshed wired glass or a square-meshed wired glass, a stranded wired glass or a polished wired glass or polished stranded wired glass having both sides polished extremely smoothly, for a window for an architectural structure or the like.

A wired glass is produced by inserting an iron mesh having a square meshwork in a ribbon glass when the ribbon glass is molded from a molten glass by rolling, gradually cooling the ribbon glass and cutting it to have a predetermined size.

The iron mesh to be inserted in a wired glass has conventionally been produced by netting an iron wire having a diameter of from 0.5 to 0.6 mm to have a predetermined mesh size.

A rhombus-meshed wired glass is a glass inserted with a mesh having a rhombic meshwork in which wires are arranged obliquely with respect to the moving direction of the ribbon glass, and one of the diagonal lines is substantially in parallel to the moving direction. Usually, this rhombic meshwork is rendered to be an obliquely arranged substantially square meshwork by being stretched in the moving direction when it is inserted in the ribbon glass.

Further, a square-meshed wired glass means a glass plate in which a mesh is inserted so that orthogonally crossed wires are each substantially in parallel or substantially perpendicular to the moving direction of the ribbon glass when the wires constituting the mesh are net orthogonally, for example.

On the other hand, a stranded wired glass is different from the above wired glasses in that instead of an iron mesh, a plurality of stainless steel wires having a diameter of 0.4 mm are inserted in parallel in a ribbon glass so as to be substantially in parallel to its moving direction.

A polished wired glass or a polished stranded wired glass is produced by continuously polishing both sides of a wired glass or a stranded wired glass respectively. For example, in a case of a single side continuous polishing method, a wired glass or a stranded wired glass having typically a width of from 2.5 to 3 m is attached to a table by means of gypsum etc., and one side of the glass is polished by polishing machines (for example, constituted by from about 15 to 30 grinding machines and from about 15 to 50 polishing machines) disposed in line as the table is moved at a moving speed of from 3 to 10 m/min. After the polishing of one side is finished, the glass sheet is removed from the table, and its unpolished side is polished in the same manner.

In the above wired glass or the polished wired glass, iron wires were exposed at its end surface. Accordingly, there was a problem that iron wires were rusted by a moisture invading from gaps between the glass sheet and wires, and then, the glass sheet was broken by a cubical expansion of the wire, or a crack was generated in the glass sheet.

To solve this problem, a wired glass inserted with an iron mesh plated with Sn etc. has been proposed. However, a sufficient effect has not always been obtained.

On the other hand, with respect to the above-mentioned stranded wired glass, the problem of rusting has not been occurred since it uses stainless steel wires.

Therefore, many proposals have been made to solve the problem of rusting by applying a stainless steel mesh to a wired glass.

However, a wired glass or a polished wired glass having a stainless steel mesh has not been industrially produced yet. This is considered to be because many conventional proposals were based on a knowledge obtained in a laboratorial scale, and could not satisfy requirements essential to an industrial production for producing a large-sized wired glass having typically a width of from 2.5 to 3 m continuously in large quantities.

It is an object of the present invention to provide a process for producing a mesh for a wired glass and a wired glass which solve the above problems.

### DISCLOSURE OF THE INVENTION

According to a first aspect of the present invention, there is provided a wired glass wherein the mesh comprises stainless steel wires crossed one another, wherein the diameter of the wires is within a range of from 0.30 to 0.45 mm, and intersections of the wires are welded, according to claim 1.

Preferably, there is provided the mesh for a wired glass, wherein the thickness of each intersection is from 82 to 97% of the sum of diameters of two intercrossed wires.

Preferably, there is provided the mesh for a wired glass, wherein the wires have an average linear expansion coefficient of at most 14×10⁻⁶/°C at a temperature of from 20 to 700°C and a tensile strength of at most 200 N/mm² at 700°C.

Preferably, there is provided the mesh for a wired glass, wherein the wires consist essentially of from 74 to 83 % of Fe, from 0.2 to 8 % of Ni, from 16 to 25 % of Cr, from 0.5 to 2 % of Mn and from 0 to 3 % of Mo represented by mass percentage.

According to a second aspect of the present invention, there is provided a process for continuously producing a mesh for a wired glass, comprising stainless steel wires crossed one another according to claim 5.

Preferably, there is provided the process for producing a mesh for a wired glass, wherein the width of each groove at its bottom is from 1.1 to 2 times the diameter of the wires to be fitted, the width of the groove at its top is at least 2 times the diameter of said wires, and the width of the groove at its other portions is at least 1.1 times the diameter of said wires.

Preferably there is provided the process for producing a mesh for a wired glass, wherein the welding of intersections in said wire-intercrossed product is carried out by means of a spot welding.

Preferably, there is provided the process for producing a mesh for a wired glass, wherein the thickness of the welded intersections is from 82 to 97% of the sum of diameters of two intercrossed wires.

Preferably, there is provided the process for producing a mesh for a wired glass, wherein the wires have an average linear expansion coefficient of at most 14×10⁻⁶/°C at a temperature of from 20 to 700°C and a tensile strength of at most 200 N/mm² at 700°C.

Preferably, there is provided the process for producing a mesh for a wired glass, wherein the wires consist essentially of from 74 to 83 % of Fe, from 0.2 to 8 % of Ni, from 16 to 25 % of Cr, from 0.5 to 2 % of Mn and from 0 to 3 of Mo represented by mass percentage.

Preferably, there is provided the process for producing a mesh for a wired glass, wherein the mesh having welded intersections is retrieved by a retrieving roll, and the rotation of said retrieving roll is controlled so that the retrieving length of the mesh from the time when said V₁ is 0, is equal to the moving distance in a circumferential direction of the cylindrical roll from the circumferential position when V₁ is 0.

Preferably, there is provided the process for producing a mesh for a wired glass, wherein the mesh having welded intersections is retrieved by a retrieving roll, and said mesh is pulled by the retrieving roll to an extent that V₂ stays 0, when V₁ is 0.

Preferably there is provided the process for producing a mesh for a wired glass, wherein said mesh is applied with a constant tension.

Preferably, there is provided the process for producing a mesh for a wired glass, wherein the mesh is retrieved through a tensioner.

Preferably, there is provided the process for producing a mesh for a wired glass, wherein the tensioner has a vertically movable rotational roller in contact with the mesh, and the vertical position of the roller is controlled to suppress a slack of the mesh.

The inventors of the present application have conducted extensive studies as to the reason why an industrial production of a wired glass employing a mesh made of stainless steel wires has not been successful. As a result, they have found that the unsuccessful industrial production has been derived from the fact that employing a stainless steel mesh instead of a conventional iron mesh deteriorates cutting properties of the wired glass. Thus, the present invention has been able to be achieved.

### BRIEF DESCRIPTION OF THE DRAWINGS

Fig. 1 is a perspective view illustrating a wired glass according to a first embodiment of the present invention.
Fig. 2 is a schematic view illustrating a production process for producing a wired glass.
Fig. 3 is a schematic perspective view illustrating a production apparatus.
Figs. 4(A) and 4(B) are respectively a schematic perspective view and a cross-sectional view of an important portion illustrating a restriction means.
Fig. 5 is a plan view illustrating an important portion of a fixing means.
Figs. 6(A) and 6(B) are cross-sectional views illustrating an important portion of the fixing means.
Fig. 7 is a schematic perspective view illustrating a modified embodiment of the present invention.
Fig. 8 is a schematic perspective view illustrating a modified embodiment of the present invention.
Figs. 9(A) to 9(E) are side views each illustrating steps of the process for producing a wired glass.
Fig. 10 is a plan view illustrating a deformed mesh.
Fig. 11 is a side view illustrating a second embodiment of the present invention.
Fig. 12 is a side view illustrating a third embodiment of the present invention.
Fig. 13 is a side view illustrating a fourth embodiment of the present invention.
Fig. 14 is a side view illustrating a fifth embodiment of the present invention.
Fig. 15 is an enlarged view of an important portion of Fig. 14.

In the Figures, a numerical symbol 10 designates a wired glass, 11 designates a wire, 12 designates a mesh (a mesh for a wired glass), 36 designates a cylindrical roll, 34 designates a retrieving roll, 37 designates a groove, 51 designates a detecting means, 52 designates an AC servomotor, 55 designates a tensioner, 65 designates a contacting means and 70 designates a salvage.

### BEST MODE FOR CARRYING OUT THE INVENTION

An embodiment of the present invention will be described in detail with reference to drawings.

In each of the following embodiments, the same members as those already described are designated by the same or the corresponding symbols in order to simplify or omit description.

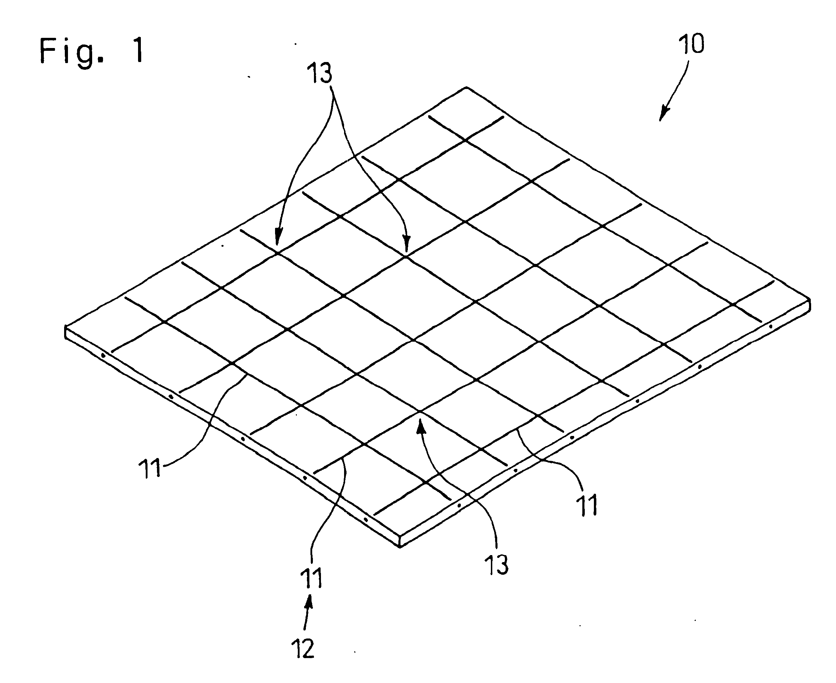

As illustrated in Fig. 1, a wired glass 10 as a first embodiment of the present invention is a glass sheet in which a mesh 12 for a wired glass formed by crossing a large number of stainless steel wires 11 one another (hereinafter, referred simply to as a mesh 12) is inserted.

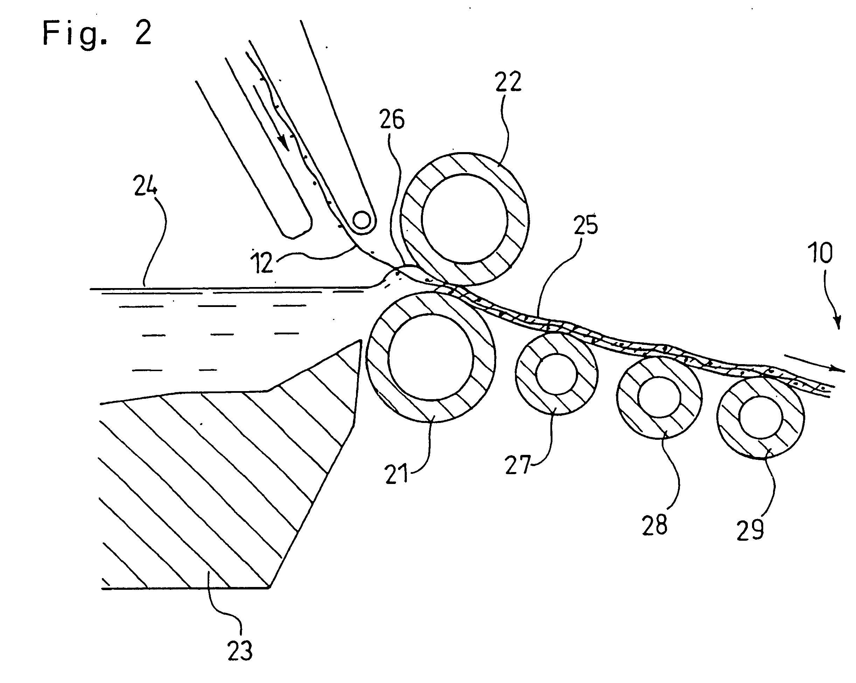

The wired glass 10 is, for example, produced in the following manner. Namely, as illustrating in Fig. 2, molten glass 24 is taken out from a front end of a tank 23 and molded to be a plate-like shape by means of a pair of rolling rolls 21 and 22 to obtain a ribbon glass 25. At this time, a mesh 12 having a square-meshwork is inserted into a buildup 26 of molten glass 24 formed just before the rolling rolls 21 and 22. The ribbon glass 25 in which the mesh 12 is inserted is conveyed by tray rolls 27, 28 and 29 to a lehr, not shown, gradually cooled and cut into a wired glass having a predetermined size. Fig. 2 illustrates a case where a mesh is inserted in a single-layer glass. However, a process for industrially producing a wired glass is not limited to this, and may be a sandwich method of inserting the mesh between layers of a two-layered glass.

Returning to Fig. 1, in the mesh 12, each of the intersections 13 of the wires 11 is fixed by an electric resistance welding such as a spot welding. When the wired glass 10 is cut into one having a predetermined side, the cut surface of the wire 11 is exposed from the cut surface of the wired glass 10.

The wired glass 10 is, for example, a rhombus-meshed wired glass in which a mesh 12 having a rhombus meshwork of wires 11 is inserted so that the wires 11 are arranged obliquely with respect to the moving direction of the ribbon glass 25 (refer to Fig. 2), one of the diagonal lines of the mesh is substantially in parallel to the moving direction of the ribbon glass 25, and the other diagonal line is substantially perpendicular to the moving direction, or a square-meshed wired glass in which a mesh 12 is inserted so that the wires 11 are substantially in parallel or substantially perpendicular to the moving direction of the ribbon glass 25. The wired glass 10 illustrated in Fig. 1 is a square-meshed wired glass.

Further, the meshwork in this specification is not limited to be one having a square, a rectangular or a rhombus shape, but it includes one having a parallelogram or a polygonal shape.

If the diameter of the wire 11 is at most 0.30 mm, there is a risk that the wires are excessively fused to cause breaking at a time of welding the intersection 13. The diameter is preferably at least 0.33 mm. If the diameter of the wires 11 exceeds 0.45 mm, cutting of the wired glass 10 becomes difficult due to the presence of the wires 11 as an obstruction. The diameter is preferably at most 0.40 mm, more preferably at most 0.39 mm. Here, the cross-sectional shape of the wires 11 is usually a circular shape, but it may, for example, be an ellipsoidal or a polygonal shape. In a case of a non-circular cross-section, the average of the maximum width and the minimum width is designated as the diameter.

The thickness H2 of the welded intersection 13, is preferably from 82 to 97% of the sum H1 of diameters of two wires 11 and 11 intercrossing at the intersection 13. If it is less than 82%, there is a risk that the wires 11 are excessively fused to cause breaking. H2 is more preferably at least 87% of H1. If it exceeds 97%, there is a risk that the welded portion comes off. The proportion is more preferably at most 95%.

The wire 11 preferably has an average linear expansion coefficient α of at most 14×10⁻⁶/°C at a temperature of from 20 to 700°C and a tensile strength S of at most 200 N/mm² at 700°C. If these parameters are out of these ranges, there is a risk that the ribbon glass 25 waves, or the surface irregularities of the ribbon glass 25 increase.

α is preferably at most 13×10⁻⁶/°C. Further, α is preferably at least 10×10⁻⁶/°C, more preferably at least 11×10⁻⁶/°C It is particularly preferably from 11×10⁻⁶ to 13×10⁻⁶/°C.

S is more preferably at most 150 N/mm², particularly preferably at most 100 N/mm². Further, S is preferably at least 50 N/mm², more preferably at most 70 N/mm². Here, the tensile strength is a measured value by a method specified in the Japanese Industrial Standard JIS G4309-8.1 tensile test.

The reason why the waving of the ribbon glass 25 is suppressed or its surface irregularities are reduced by thus limiting α and S, is considered as follows. Namely, the temperature of the ribbon glass is typically 700°C immediately after it is shaped by water-cooled rolling rolls 21 and 22. In a case of a soda lime silica glass commonly used as glass for the wired glass 10, the ribbon glass is quickly consolidated as it is cooled to a temperature below 700°C. If α is limited within the above range, the difference of the expansion coefficient between the ribbon glass 25 and the wires 11 at a time of this cooling step becomes small.

Further, if S is limited within the above range, the tensile force of the conveyed ribbon glass 25 which pulls the mesh 12 inserted in the ribbon glass 25, becomes larger than the tensile strength S of the wires 11 constituting the mesh 12. As a result, the wires 11 are extended by a plastic deformation, and a relative shrink amount of the wire 11 with respect to the ribbon glass 25 by a consecutively conducted cooling step, becomes smaller by the amount of the above extension, whereby the above waving is suppressed or the surface irregularities are reduced.

The wire 11 preferably consists essentially of from 74 to 83% of Fe, from 0.2 to 8% of Ni, from 16 to 25% of Cr, from 0.5 to 2% of Mn and from 0 to 3% of Mo represented by mass percentage. A preferred embodiment is described as follows.

If the percentage of Ni exceeds 8%, a magnetic separation of the wire 11 becomes difficult, and a recovery of the wire 11 to be performed after crashing the wired glass 10 for recycling becomes difficult. The percentage is preferably at most 4%. If it is less than 0.2%, the corrosion resistance of the wire 11 is reduced.

If the percentage of Cr is less than 16%, the corrosion resistance of the wire 11 is reduced. If it exceeds 25%, the magnetic separation of the wire 11 becomes difficult. It is preferably at most 20%.

If the percentage of Mn is less than 0.5%, a crack is likely to take place in the glass around the wire 11. If it exceeds 2%, the wire tends to be embrittled. It is preferably at most 1%.

Mo is not essential to the wire 11, but it may be contained at most 3% in order to improve the corrosion resistance of the wire 11. If it exceeds 3%, the workability of the wire 11 decreases. If Mo is contained, the content is preferably at least 0.5%.

The wire 11 in the above preferred embodiment consists essentially of the above components, but it may contain other components within a range not impairing the object of the present invention. For example, C, Al, Si, P and Ti may be contained at a level of impurities.

However, the percentage of C is preferably at most 0.1%. If it exceeds 0.1%, there is a risk that bubbles are formed in the glass. It is preferably at most 0.01%. The wire 11 constituting the mesh 12 may be plated with Sn, Cr or Ni etc. However, since such a process increases the number of production steps of the mesh 12, it is preferably that the mesh 12 is not plated from this viewpoint.

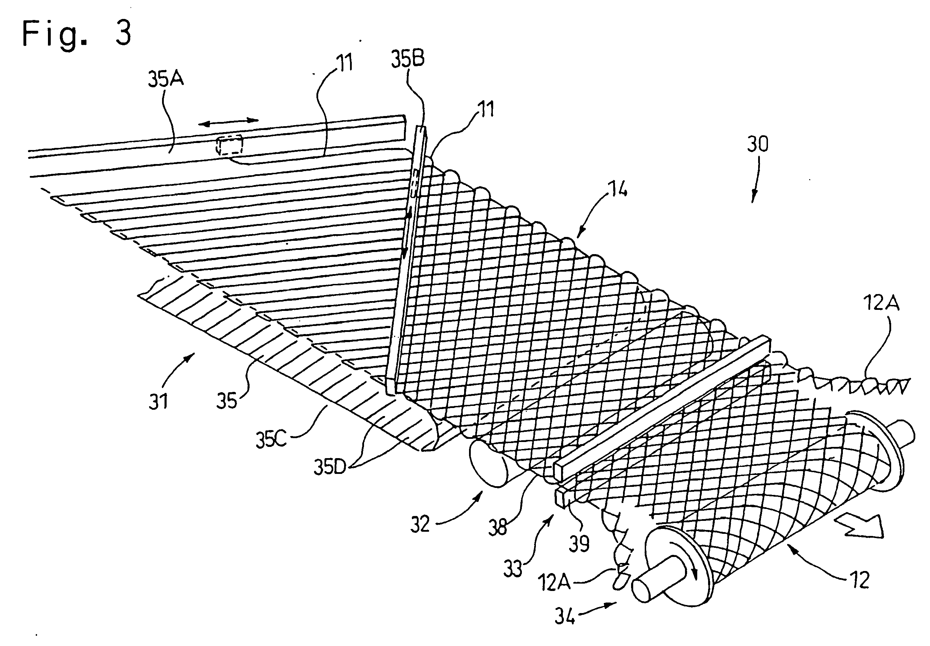

Fig. 3 shows a production apparatus 30 for producing the mesh 12. The mesh 12 exemplified here is a mesh for a rhombus-meshed wired glass.

The production apparatus 30 comprises a wire reel-out portion 31 for reeling out and intercrossing stainless wires 11 to form a wire-intercrossed product 14, a restricting means 32 for restricting the relative position of each of these wires 11, a fixing means 33 for welding and fixing the intersections 13 of each of the wires 11 to form a mesh 12, and a retrieving roll 34 for retrieving the mesh 12 as it is pulled towards the lower right direction in Fig. 3.

The wire reeling-out portion 31 has a lower wire slipe 35A and an upper wire slipe 35B for pulling out the wire 11 from a resin bobbin, not shown, around which the wire 11 is wound, and a conveyer 35C for conveying a wire-intercrossed product 14 constituted by the wires 11 intercrossed by the lower wire slipe 35A and the upper wire slipe 35B.

The lower wire slipe 35A and the upper wire slipe 35B are arranged at an angle of about 45° with different orientations with respect to the conveying direction of the mesh 12 being produced. Therefore, the lower wire slipe 35A and the upper wire slipe 35B arrange the wire 11 at an angle of about 45° with different orientations at a predetermined interval with respect to the conveying direction of the mesh being produced.

Therefore, the wire reeling-out portion 31 is adapted to intercross and arrange each wires 11 so that one of the diagonal lines of the substantially rhombic meshwork becomes parallel to the conveying direction.

On the other hand, the conveyer 35C has a plurality of plates 35D having a predetermined width disposed in an endless truck, and is adapted to hook the wires 11 at both ends in the longitudinal direction of each of the plates 35D and perform a reciprocating movement, whereby predetermined interval of the wires 11 can be maintained.

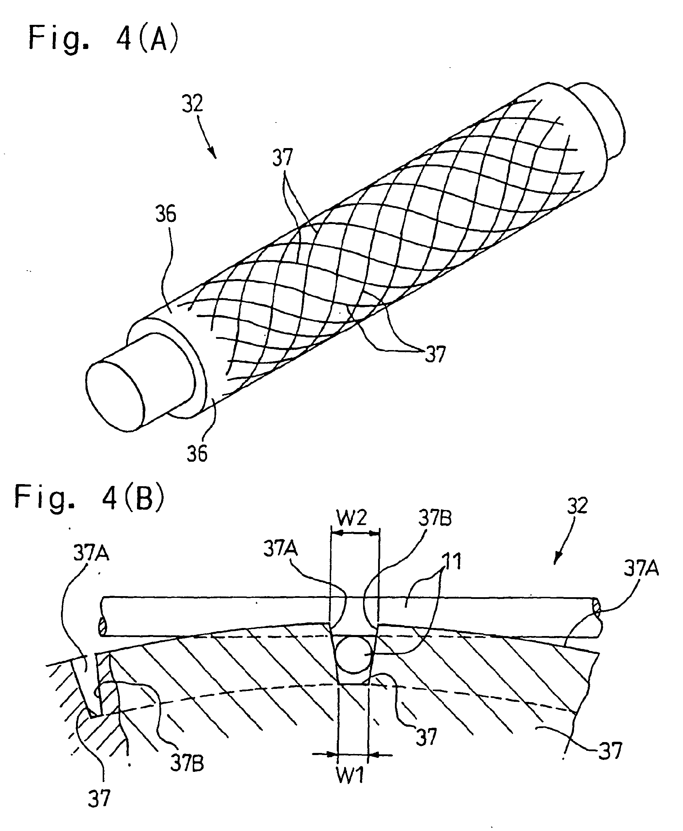

As illustrated in Fig. 4(A), the restricting means 32 is a cylindrical roll 36 disposed across, preferably, perpendicular to the conveying direction of the mesh 12. A large number of grooves 37 are formed in an outer periphery 36A of the cylindrical roll 36.

The cylindrical roll 36 is rotatable around the axial center of the cylindrical roll 36.

As illustrated in Fig. 4(B), each of the grooves 37 has a substantially V-shaped cross-section having a pair of walls 37A and 37B facing each other so that the groove 37 becomes thinner towards the axial center of the cylindrical roll 36. Namely, the width of the groove 37 is reduced from the top of the groove 37 towards its bottom.

The width W1 at the bottom of the groove 37, as the minimum width in a direction of the depth, is from 1.1 to 2 times, preferably from 1.1 to 1.8 times the diameter of the wire 11, and the width W2 at the top of the groove 37 is more than 2 times the diameter of the wire 11, preferably from 4 to 9 times. W2 is the maximum width of the groove 37 in the direction of the depth in Fig. 4(B).

In this first embodiment, the width of the groove 37 excluding the bottom and top is more than 1.1 times the diameter of the wire 11.

Returning to Fig. 4(A), the grooves 37 are formed in a spiral form intercrossing with a predetermined interval along the outer periphery 36A of the cylindrical roll 36.

Here, the predetermined interval corresponds the distance between wires 11 constituting the mesh 12, namely, it is equal to the mesh size of the mesh 12.

The cylindrical roll 36 is rotated around its own axis in a state that each of the wires 11 is accommodated in each of the grooves 37, namely, in a state that the wire-intercrossed product 14 is fit in the grooves 37, whereby each of the wires 11 is continuously aligned and conveyed to a fixing means 33 in the next step.

Since W1 of the grooves 37 is from 1.1 to 2 times the diameter of the wire 11, W2 of the grooves 37 is more than 2 times the diameter of the wire 11, and the width of the groove 37 at a portion except its top and bottom is more than 1.1 times the diameter of the wire 11, the wire 11 is securely held in contact with the walls 37A and 37B, and each of the wires 11 is aligned with predetermined intervals.

Returning again to Fig. 3, the fixing means 33 is a spot welding machine having an upper electrode assembly 38 and a lower electrode assembly 39 for pinching the intersections 13 of wires 11 of the wire-intercrossed product 14 after having been passed through the restricting means 32.

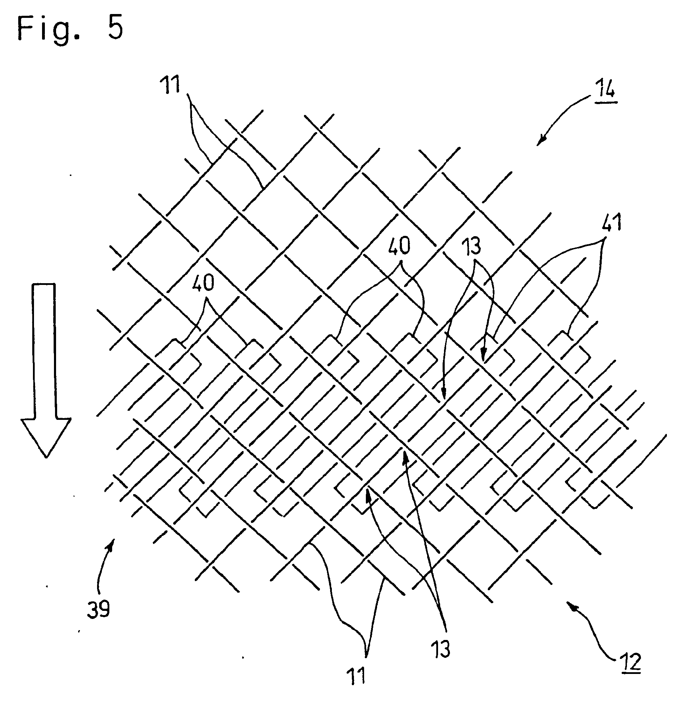

As illustrated in Fig. 5, the lower electrode assembly 39 has a plurality of electrode units 40 each having a substantially rectangular surface disposed at an angle of about 45° with respect to the feeding direction in the process indicated by an arrow in Fig. 5. These electrode units 40 are disposed in parallel one another to weld four intersection 13 of wires 11 at a time to fix them.

Each of the electrode unit 40 which can weld these four intersections 13 at a time, may be one having two electrodes each of which can weld two intersections, or may be one having four electrodes each can weld one intersection. In each of the electrodes, the pinching pressure, the current and the voltage can be controlled independently.

If the wire 11 has a large diameter variation so that the wire has a smaller diameter or if there is a possibility that an intersection 13 deviates from the center of the electrode, it is preferred to employ an electrode unit having two electrodes each can weld two intersections, or an electrode unit having four electrodes each can weld one intersection.

Further, in order to make H2 within a range of from 82 to 97% of H1, it is preferred to weld at least twice rather than welding four intersections 13 at one time. For example, it is preferred to dispose two electrodes each can weld two points, carry out the first welding by the electrode at an upstream side followed by the second welding by the electrode at a downstream side.

The above description has been made with respect to the case of welding four intersections 13 at the same time or sequentially. However, the number of intersections 13 in such process is not limited to four, and may be one, two, three or at least five. It is preferred to be at least two to obtain a large speed to produce the mesh.

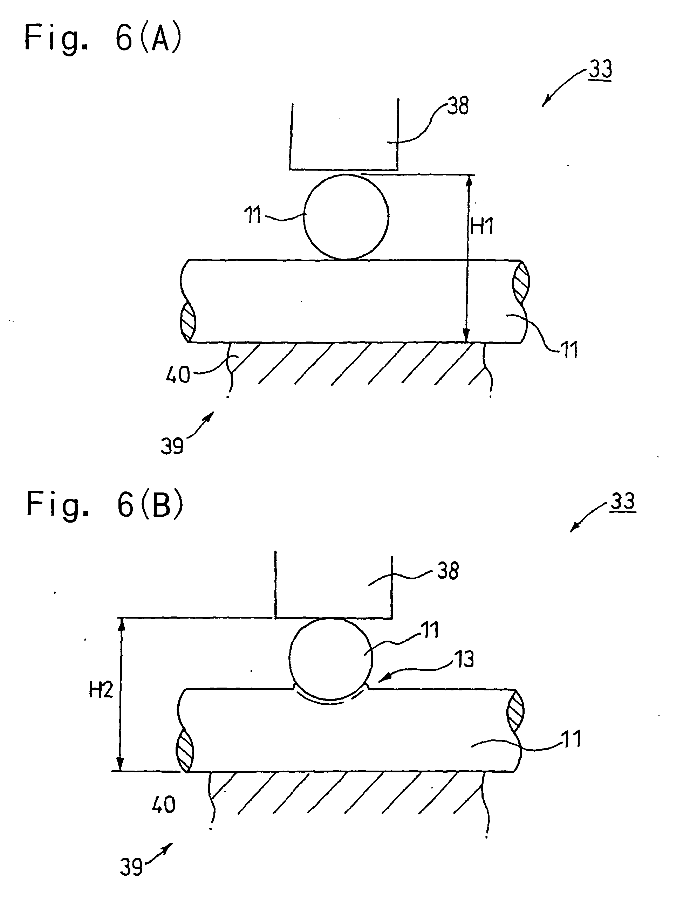

As illustrated in Fig. 6, the fixing means 33 is constituted so that the upper electrode assembly 38 can move closer to or apart from the lower electrode assembly 39 in a fixed state. By properly selecting the pinching pressure, the electric current and a proximity time (a time of pinching the wire 11) of the upper electrode assembly 38 and the lower electrode assembly 39, contact portions of two intercrossed wires 11 and 11 can be melted into each other so that the built-up thickness of the two intercrossed wires 11 at the intersection 13, namely the thickness H2 of the welded intersection 13 (refer to Fig. 6(B)), becomes from 3 to 18% smaller than the sum H1 of diameters of the intercrossed wires 11 and 11 at the intersection 13 (refer to Fig. 6(A)). The H2 thickness is from 82 to 97% of the thickness H1.

As illustrated in Fig. 3, the mesh 12 thus produced is cut to remove both ends 12A in the conveying direction, retrieved by a retrieving roll 34, and used in the production process of the wired glass 10 as illustrated in Fig. 2.

According to the above first embodiment, the wires 11 constituting the mesh 12 have a diameter of from 0.30 mm to 0.45 mm, the intersections of the wires 11 are welded, and therefore there is no risk of causing error of relative position of the wires 11 when the mesh 12 is inserted in the ribbon glass 25, and a wired glass 10 having a good cutting property comparable with a conventional wired glass having an iron mesh can be obtained.

Further, in the mesh 12 made of these wires 11, the contact portions of the two intercrossed wires 11 are melted into each other so that the thickness H2 at the intersection 13 becomes from 82 to 97% of the sum H1 of the diameters of the intercrossed wires 11 and 11 at the intersection 13, whereby there is less risk that the welded portion comes off as compared with a case where H2 exceeds 97% of H1, and there is less risk of breaking off of the wires 11 as compared with the case where it is less than 82%.

Further, according to the above production apparatus 30, intervals of the wires 11 can be maintained constant by making the plurality of grooves formed on the cylindrical surface 36A of the rotatable cylindrical roll 36 hold each of the wires 11 constituting the wire-intercrossed product 14 so that the wires 11 are continuously aligned and conveyed.

Particularly, according to the production apparatus 30, since the cross sectional shape of each of the grooves 37 is a substantially V-shape, the wire 11 is securely held at the center of the cross section of the groove 37. In other words, the wires 11 are held securely with a predetermined intervals.

Further, according to the production apparatus 30, a plurality of intersections 13 at which wires 11 are crossed are fixed by a spot welding, whereby these intersections 13 can be fixed. Further since a plurality of the intersections 13 are spot-welded at the same time, a high-speed production of the mesh 12 can be achieved.

The present invention is not limited to the above first embodiment, and can be modified or improved appropriately.

For example, in the above first embodiment, a square-meshed wired glass is exemplified as the wired glass 10, but the present invention can be applied also to a rhombus-meshed wired glass.

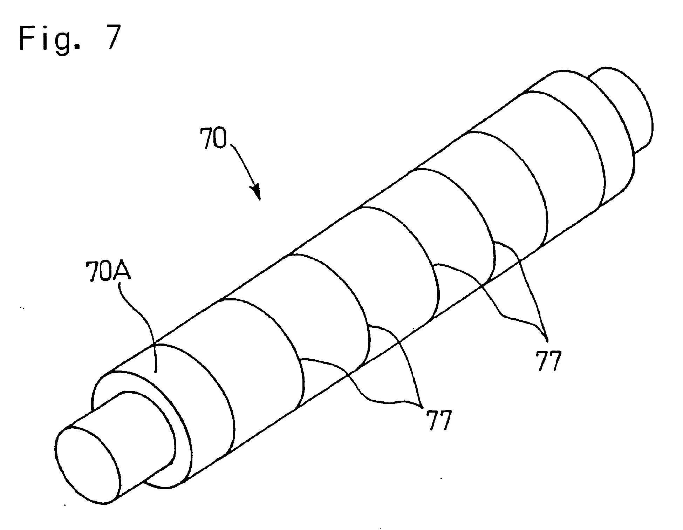

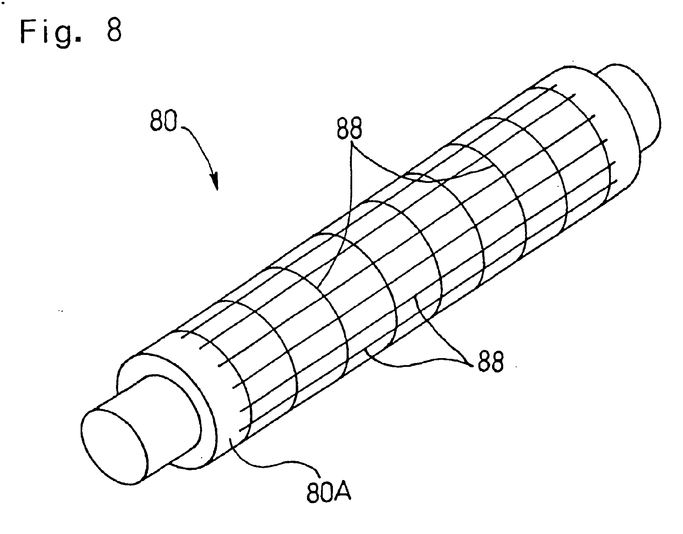

In this case, as the restricting means for producing the mesh, a cylindrical roll 70 illustrated in Fig. 7 or a cylindrical roll 80 illustrated in Fig. 8 may be exemplified.

Namely, the cylindrical roll 70 shown in Fig. 7 has a large number of grooves 77 formed in a cylindrical surface 70A in a circumferential direction. Further, the cylindrical roll 80 shown in Fig. 8 has a large number of grooves 88 formed in circumferential and the axial directions in a cylindrical surface 80A.

The material, shape, dimension, melting amount, type, number, disposed location, etc. of the wires, mesh, intersections, cylindrical roll, grooves etc. exemplified in the first embodiment can be optionally selected and not limited so long as the object of the present invention can be achieved.

In the process for producing a polished wired glass, the method of polishing one or both sides of the wired glass of the present invention is not particularly limited. For example, the above-mentioned single-side continuous polishing method may be mentioned. Further, as a method for polishing both sides of the wired glass of the present invention, a method of applying the above-mentioned single-side continuous polishing method once to each of both sides of the wired glass, or a double-side continuous polishing method may be mentioned.

In order to improve the efficiency of polishing both sides, it is preferred to use, among the wired glass of the present invention, particularly one having such wire properties that α is at most 14×10⁻⁶/°C and S is at most 200 N/mm². The reason is because such a wired glass has a high possibility in that waving at its both sides or surface irregularities are small.

A meshed wired glass means one whose both surfaces are polished to be extremely smooth according to Japanese Industrial Standards as described above. The present disclosure includes one whose only one side is polished and the other side is not polished.

### EXAMPLES

Employing a wire made of SUS430 having a composition represented by mass percentage of Fe: 83.95%, Ni: 0.24%, Cr: 16.68%, Mn: 0.77%, C: 0.011%, Si: 0.34%, P: 0.008% and S: 0.003%, which has a circular cross section having a diameter H1 of 0.35 mm, a mesh for a wired glass having a rhombus meshwork with a mesh size of 19.35 mm was produced according to the method described with reference to Figs. 3, 4, 5 and 6.

Here, the above wire has an α of 11.9×10⁻⁶/°C and an S of 83 N/mm².

Each of grooves of a cylindrical roll employed for producing the mesh has a substantially V-shape as shown in Fig. 4(B), and has a W1 of 0.5 mm and a W2 of 2.5 mm.

The thickness H2 of welded intersections of the obtained mesh was 0.63 mm and accordingly, H2/H1 was 90%.

Then, this mesh was inserted into a molten glass from its bottom side to produce a wired glass, differently from Fig. 2. Namely, making contact portions of a pair of rolling rolls lower than the liquid surface of the molten glass to form a long pillow-shaped buildup (bolster) of molten glass in the upstream side of the contact portions of lower rolling roll, the mesh was inserted into the bolster. The temperature of the bolster was from 900 to 1,200°C, and the temperature of the ribbon glass was 700°C after passed through the pair of rolling rolls.

The length of the mesh inserted was 90 m, the diameter of wires of the mesh was 0.35 mm, and the thickness and the width of the ribbon glass were respectively 6.8 mm and 2.7 m.

The ribbon glass was gradually cooled and then cut to obtain a wired glass having a size of 2.54 m×1.80 m. Here, the cutting was carried out without any problem and the cutting property was good.

In inspecting this wired glass, the number of separations of welding at the welded intersections, cracks in the glass around the wires and the bubbles in the glass around the intersections are all about the same or smaller than those of an ordinary wired glass employing a iron mesh, and accordingly, there was no problem. Further, waving at the surface was not observed.

Each three samples of this wired glass (hereinafter referred to as the product of the present invention), a wired glass employing a iron mesh without any treatment (hereinafter referred to as the conventional product 1) and a wired glass employing Cr-plated iron mesh (hereinafter referred to as the conventional product 2) were prepared. The following salt water immersion tests were carried out for 30 days to examine the rust easiness.

Namely, the samples were repeatedly immersed in a salt water having a concentration of 5% represented by mass percentage and dried every other day, and examined the progress of rust from the end surface of each sample and the presence or absence of a crack generated at the end surface of each sample caused by the rust. Here, immersion or drying in a weekend was carried out for three days. The result is shown in Table 1.

**Table 1**

| | Length of the rust proceeded (mm) | Cracks |
|---|---|---|
| Product of the present invention | 2 to 3 | Not found |
| Conventional product 2 | 20 to 45 | Found on 5th day |
| Conventional product 1 | 200 to 450 | Found on 2nd day |

Further, the surface irregularities at both sides of each two samples of the product of the present invention and the conventional product 1 were measured as follows and compared. Namely, employing a displacement sensor (differential transducer, AC-5SPM) manufactured by Shinkoh Electronics Co., Ltd., an irregularities were measured with respect to a range of 1.88 m in a direction of width. The maximum values of each of the measurements 1 to 4 and averages are shown in Table 2 (unit: mm).

**Table 2**

| | 1 | 2 | 3 | 4 | Average |
|---|---|---|---|---|---|
| Conventional product 1 | 0.19 | 0.20 | 0.33 | 0.45 | 0.29 |
| Product of the present invention | 0.13 | 0.15 | 0.10 | 0.05 | 0.09 |

The irregularities of the products of the present invention are apparently smaller than those of the conventional product 1. In fact, when the test of continuously polishing both sides to smoothen by the above-mentioned single-side continuous polishing method, the polishing efficiency of the product of the present invention was apparently improved as compared with the conventional product 1.

Then, the second aspect of the present invention, will be described, and solutions according to the second to fourth embodiments will be proposed.

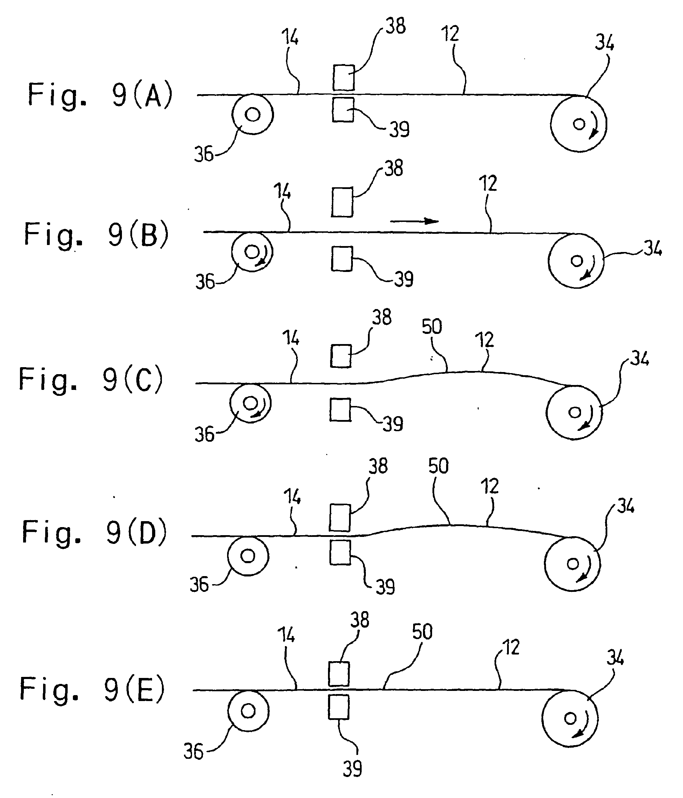

In a process for producing a mesh for a wired glass, there is a risk that the phenomena as shown for the purpose of illustration in Figs. 9(A) to 9(E) occur if the length of a mesh to be retrieved by the retrieving roll 34 is longer.

Namely, in Fig. 9(A), the upper and lower electrode assemblies 38 and 39 pinch the intersections of the wire-intercrossed product 14 to weld the intersections. At this moment, the cylindrical roll 36 stands still, and the retrieving roll 34 continues to retrieve a mesh 12.

In Fig. 9(B), after welding the above intersections by the upper and lower electrode assemblies 38 and 39, the.upper and lower electrode assemblies 38 and 39 are released from the intersections. At the same time, the cylindrical roll 36 starts rotating to start conveying the mesh 12 and then, the mesh 12 is rapidly accelerated.

In Fig. 9(C), if the rotation of the retrieving roll 34 can not follow the rapid acceleration of the mesh 12, the mesh 12 will be excessively pushed forward. Accordingly, a slack was formed at a portion 50 as a part of the mesh 12 between the cylindrical roll 36 and the retrieving roll 34. The slack propagates to a part of the mesh 12 already wound around the retrieving roll 34. Specifically, the mesh 12 is slacked so that the part already wound around the retrieving roll 34 and another part wound successively thereon are apart from each other in a direction of the thickness.

In Fig. 9(D), the intersections of the wire-intercrossed product 14 are pinched again by the upper and lower electrode assemblies 38 and 39 to weld the next intersections.

In Fig. 9(E), since the retrieving roll 34 continues to retrieve the mesh 12, the slacked portion 50 is rapidly pulled. By this operation, the formerly wound part of mesh 12 and the part of mesh 12 wound successively thereon which are slacked so as to be apart from each other around the retrieving roll 34, are strongly pushed each other. Then, there is a high risk that wires in the formerly wound part of mesh 12 and the wires of the part of mesh 12 wound successively thereon engage each other. '

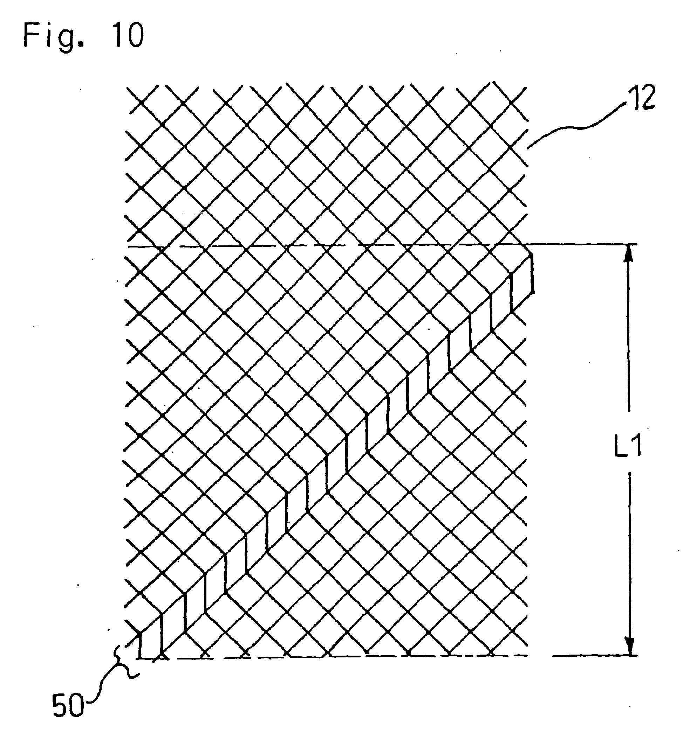

If the retrieving roll 34 continues to retrieve it in this state, and if the wires are engaged with each other, a meshwork part 50 as a part of the mesh 12 will be deformed as illustrated in Fig. 10. The deformation of the meshwork of the mesh 12 occurs in an area of narrow width. However, since the mesh 12 has a diagonal meshwork, a relatively long range L1 of the mesh 12 may become defective.

Furthermore, since the mesh 12 is intermittently fed as illustrated in Figs. 9(A) to 9(E), there is a risk that the mesh 12 is loosely wound or unevenly wound. If the mesh 12 is loosely wound or unevenly wound, the roll diameter of the mesh 12 wound around the retrieving roll 34 becomes large. If it is loosely wound, the length of the mesh 12 per each roll becomes short.

In consideration of the above, solutions called second to fourth embodiments are proposed.

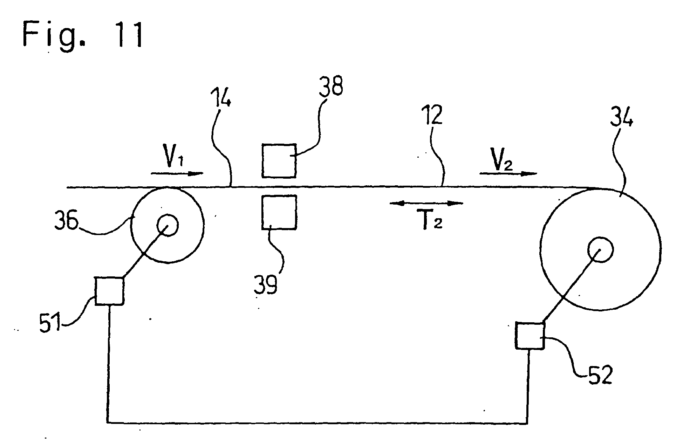

In a process for producing a mesh for a wired glass according to the second embodiment illustrated in Fig. 11, the rotating state of the cylindrical roll 36 is detected by a detecting means 51, and according to the detected rotating status, the rotating status of the retrieving roll 34 is changed by a control means 52 so that the conveying speed V₁ of the wire-intercrossed product 14 is equal to the conveying speed V₂ of the mesh 12 as a wire intercrossed product 14 having welded intersections.

The rotating state of the cylindrical roll 36 may be detected, for example, by employing a rotary encoder as the detecting means 51, to obtain a peripheral velocity of the cylindrical roll 36 from the measurement results. Here, the circumferential velocity is equal to V₁.

The rotating status of the retrieving roll 34, specifically the rotation speed of the retrieving roll 34, is changed, for example, by employing an AC servomotor as the control means 52 and supplying an input signal obtained by the above detection result so that the feeding speed V₂ of the mesh 12 becomes equal to V₁.

By thus controlling, the occurrence of a slack in the mesh 12 can be suppressed.

As a preferred method for controlling so that V₂=V₁, the following method is exemplified. Namely, at a time the intersections being welded, the conveying of the wire-intercrossed product 14 is stopped whereby V₁ becomes 0. A circumferential position of the cylindrical roll 36 at this time is memorized. Hereinafter, the time when the above feeding is stopped is simply referred to as a stand still time, and the circumferential position memorized is referred to as the circumferential position at stand still time.

Then, based on data of rotating state of the cylindrical roll 36 detected by the detecting means 51 such as a rotary encoder, each circumferential position of the cylindrical roll 36 at intervals of, for example, of 0.1 second is calculated based on the above circumferential position at stand still time. Namely, the above circumferential position is a variation amount of the circumferential position (a circumferential moving distance) from the circumferential position at stand still time.

The information including the circumferential position thus obtained by the calculation is supplied to the control means 52 such as an AC servomotor, and the rotating state of the retrieving roll 34 is changed by the control means 52 based on the above information at, for example, every 0.1 second so that the variation amount of the circumferential position of the mesh 12 at the retrieving roll 34 is equal to the variation amount of its circumferential position at the cylindrical roll 36.

At the stand still time, V₁ is 0 and V₂ also 0 as it is equal to V₁. But when further suppress of the above slack is desired, it is preferred to generate a tension T₂ (>0) in the mesh 12 at this time. In a case where an AC servomotor is employed as the control means 52, the AC servomotor is controlled so that T₂ becomes a predetermined value while satisfying the condition that V₂ is maintained 0.

According to this solution, the loose winding or the uneven winding of the mesh 12 around the retrieving roll 34 can be prevented. Thus, since the loose winding or the uneven winding of the mesh 12 is prevented, the mesh 12 is densely wound around the retrieving roll 34.

Therefore, the length of the mesh 12 per roll can be made longer. Further, the deformation of the meshwork becomes less likely to occur.

The roll diameter (measured diameter) and the mesh width of the mesh 12 wound around the retrieving roll 34 in case that the mesh 12 is produced by employing this solution, were measured. Results are shown in Table 3. In Table 3, the calculated diameter is a theoretical roll diameter calculated based on the length of the retrieved mesh (mesh length) and the wire diameter.

As shown in Table 3, it is found that the measured diameter is substantially the same as the calculated diameter. Further, the width (mesh width) of the wound mesh is also stably maintained to be substantially consistent regardless of the measured diameter. And there was no deformation in the mesh 12.

**Table 3**

| Mesh length (m) | Measured diameter (mm) | Calculated diameter (mm) | Mesh width (mm) |
|---|---|---|---|
| 50 | 218 | 210.8 | 2756 |
| 100 | 277 | 267.7 | 2756 |
| 150 | 330 | 320.9 | 2759 |
| 200 | 375 | 362.9 | 2757 |
| 250 | 413 | 400.4 | 2759 |
| 300 | 447 | 434.8 | 2759 |
| 350 | 487 | 466.6 | 2758 |
| 400 | 508 | 488.8 | 2759 |

Next, the solution of the third embodiment will be described.

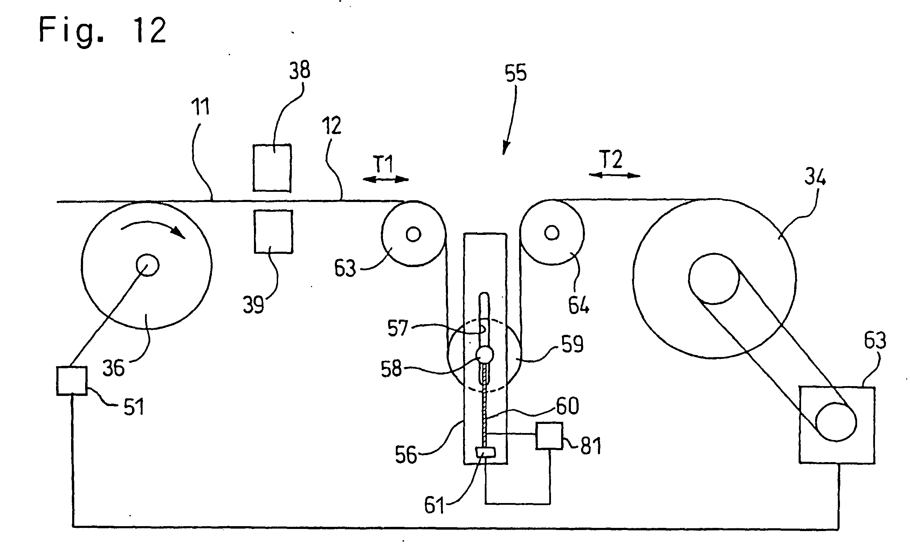

In the process for producing a mesh for a wired glass of the third embodiment illustrated in Fig. 12, by means of a contact means 55 provided between cylindrical roll 36 and the retrieving roll 34 and in contact with the mesh 12, a first tension T₁ to the mesh 12 between the cylindrical roll 36 and a tensioner 55 is made equal to the second tension T₂ to the mesh 12 between the tensioner 55 and the retrieving roll 34.

In the tensioner 55, a shaft 58 is movably fit in a guide groove 57 of a guide member 56, and a vertically movable rotational roller 59 is attached to the shaft 58. Further, the upper end of a ball screw 60 is attached to the shaft 58, the lower end of the ball screw 60 is attached either to a position detection means or a load detection means 61, and an upstream rotational roller 63 and a downstream rotational roller 64 are provided upstream side and downstream side of the guide member 56 respectively.

Thus, the tensioner 55 is provided with the vertically movable rotational roller 59, the upstream rotational roller 63 and a downstream rotational roller 64, and these rotational rollers 59, 63 and 64 are disposed so that they are in contact with the mesh 12, and the vertically movable rotational roller 59 is vertically moved up and down to bend the mesh 12 in a substantially crank shape.

By the vertically up and down movement of the vertically movable rotational roller 59 so that it comes closer to or separates from the upstream rotational roller 63 and the downstream rotational roller 64 repeatedly, the first tension T₁ and the second tension T₂ are maintained to a predetermined value.

Further, by comparing the conveying distance of the mesh 12 by the cylindrical roll 36 within a predetermined time, for example 0.1 sec., with the retrieving length of the mesh 12 by the retrieving roll 34 within the same predetermined time, the vertical position of the vertically movable rotational roller 59 is changed by a distance corresponding to a half of the difference between the feeding distance and the retrieving length by an AC servomotor 81 to maintain the tensions constant.

In the third embodiment, the retrieving roll 34 can retrieve the mesh 12 at a constant speed even if the mesh 12 is fed intermittently. Further, the mesh 12 can be retrieved while a predetermined pressure is applied to the mesh 12 at a portion between the upper and lower electrode assemblies 38 and 39 and the retrieving roll 34. Therefore, a deformation of the meshwork as seen in the portion 50 in Fig. 10 can be prevented, and loose winding or an uneven winding of the mesh can be prevented.

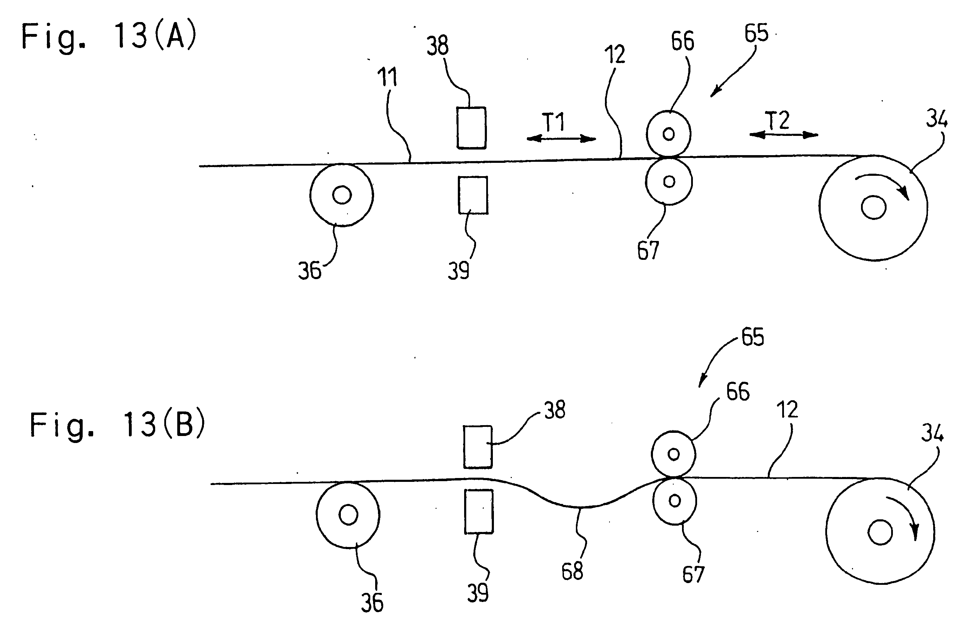

Next, the solution of the fourth embodiment will be described with reference to Figs. 13(A) and 13(B).

In the process for producing a mesh for a wired glass of the fourth embodiment illustrated in Fig. 13, a contact means 65 which is provided between the cylindrical roll 36 and the retrieving roll 34 for retrieving the mesh 12 conveyed by the cylindrical roll 36, and is in contact with the mesh 12 is used. The position of the mesh 12 is corrected so that it is retrieved by the retrieving roll 34 after it passes through a predetermined position with respect to the roller 34, and each of a first tension T1 between the cylindrical roll 36 and the contact means 65 and a second tension T2 between the retrieving roll 34 and the contact means 65 can be independently adjusted.

This process for producing a mesh for a wired glass is different from the third embodiment in that the contact means 65 is constituted by a pair of rotational rollers 66 and 67 and the structure functioning as a tensioner for absorbing a slack of the mesh 12 for a wired glass in the whole area is omitted. By employing this contact means 65, the first tension T1 applied to the mesh 12 at the upstream side of the contact means 65 can be independent from the second tension T2 applied to the mesh 12 at the downstream side.

Therefore, as illustrated in Fig. 13(B), even if a slack 68 takes place in the mesh 12, the slack 68 is only at the upstream side of the contact means 65 and the slack is not propagated to a mesh portion 12 at the downstream side of the contact means 65. Therefore, such structure can prevent an applicable tension to rapidly extend the slack mesh 12.

Thus, by making the first tension T1 applied to the mesh 12 at the upstream side of the contact means 65 independent from the second tension T2 applied to the mesh 12 at the downstream side, a deformation of the meshwork as seen in the portion 50 as a part of the mesh 12 illustrated in Fig. 10 can be prevented.

Furthermore, loose winding of the mesh 12 around the retrieving roll 34 or uneven winding can be prevented. Thus, since the loose winding or the uneven winding of the mesh 12 can be prevented, the mesh 12 can be densely wound around the retrieving roll 34, and the length of the mesh 12 per roll can be made longer.

In Figs. 13(A) and 13(B), an example of using as the contact means 65 the rotational rollers 66 and 67 is described, but the contact means 65 is not limited to be one employing the rotational rollers 66 and 67, and may be one employing a member for simply pinching the mesh 12 vertically. Briefly, the position of the mesh 12 should be corrected so that the mesh 12 is retrieved after it passes through a predetermined position with respect to the retrieving roll 34, and the first tension T1 applied to the mesh 12 at the upstream side of the contact means 65 should be independent from the second tension T2 applied to the mesh 12 at the upstream side.

Next, a description will be made with respect to a fifth embodiment.

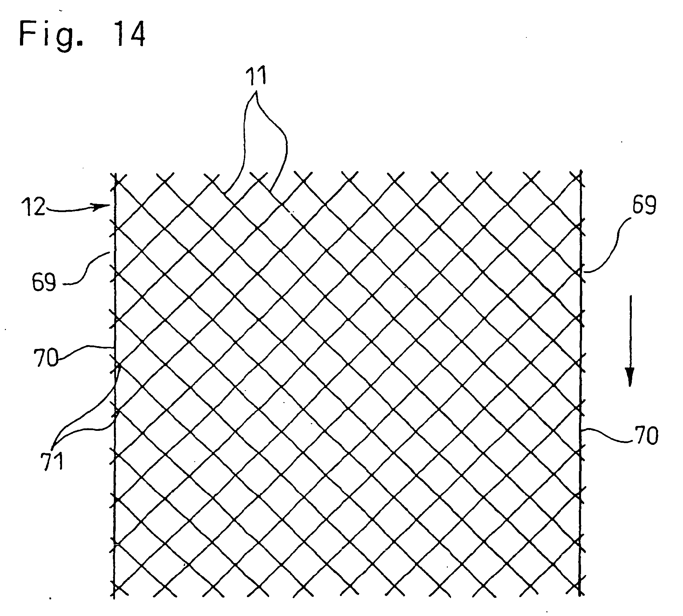

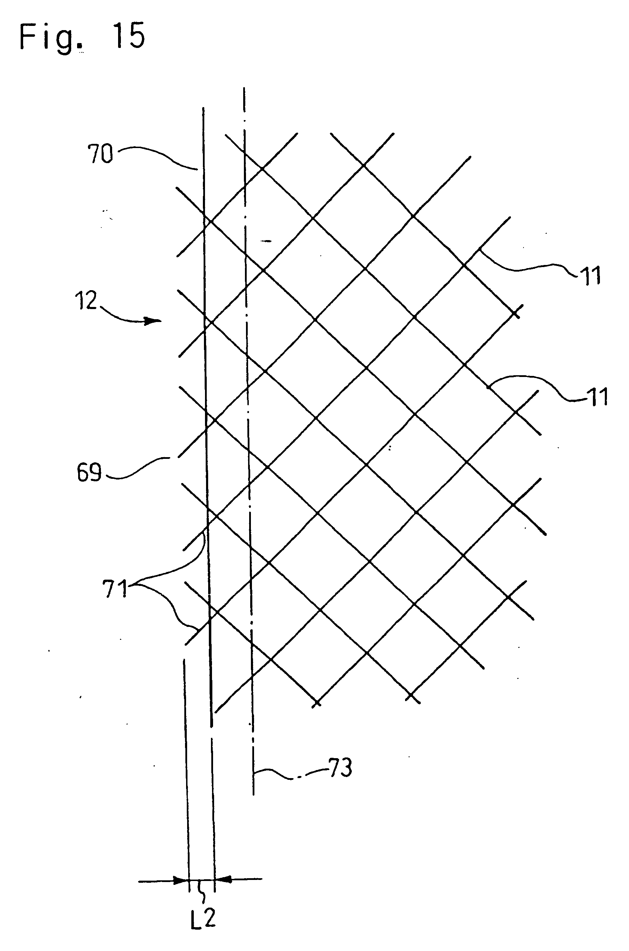

In the process for producing a mesh for a wired glass of the fifth embodiment as illustrated in Figs. 14 and 15, a metal wire 70 (hereinafter referred to as "salvage 70") is welded along each end fringe 69 in a width direction (a direction indicated by an arrow) of a mesh 12 for a wired glass.

The salvage 70 is welded to the mesh 12 at a position a predetermined distance L2 apart from an end 69 of the mesh 12 as illustrated in Fig. 15 by means of, for example, a spot welding, preferably a TIG welding.

Here, the predetermined distance L2 is preferably within a range of from 2 to 12 mm, more preferably from 3 to 8 mm, most preferably 6 mm.

Further, the salvage 70 is welded to the mesh 12 at positions excluding intersections 71. If the salvage 70 is welded to the mesh 12 at an intersection 71, there results a state of overlapping three wires, i.e., wires 11 and 11 of the mesh 12 and the salvage 70 and the thickness of the mesh 12 is thereby increased.

Further, as the salvage 70, a stainless steel wire is preferably employed.

When the wires 11 and the salvage 70 are made of the same stainless steel, there is a merit that the rust due to a cell effect is not easily generated during storage since there is no potential difference.

In Figs. 14 and 15, description has been made with respect to an example of applying salvages 70 to a mesh 12 having a rhombus meshwork. However, the shape of meshwork is not limited to be rhombus.

Thus, by welding the salvages 70 along both end fringes 69 in the width direction of the mesh 12 for a wired glass, a deformation of the meshwork as seen in the portion 50 as a part of the mesh 12 shown in Fig. 10 can be prevented.

Furthermore, when the mesh 12 is inserted into the ribbon glass, the mesh 12 is inserted under the application of a tension. Accordingly, deformation of the meshwork is little even if this tension is changed, since the salvages 70 restrict both ends of the mesh 12.

Measurements were made about distortion and the meshwork of the mesh 12 with respect to a glass sheet inserted with the mesh 12 produced by employing the process according to the fifth embodiment. Results are shown in Table 4. In Table 4, R/L means the right end portion/the left end portion of the glass sheet, Y and X mean lengths of two diagonal lines.

Here, the meshwork in the Table is represented by the measured lengths of diagonal lines of a meshwork embedded in a glass sheet, and a diagonal line ratio means a ratio of the length of the two diagonal lines. The diagonal line ratio is preferably at least 0.95, more preferably at least 0.97.

**Table 4**

| No. | Meshwork | | | |
|---|---|---|---|---|
| | R/L | X | Y | Diagonal line ratio |
| 1 | R | 27.10 | 27.70 | 0.98 |
| | L | 27.30 | 27.50 | 0.99 |
| 2 | R | 22.20 | 21.50 | 0.97 |
| | L | 22.30 | 21.55 | 0.97 |
| 3 | R | 27.05 | 27.60 | 0.98 |
| | L | 27.30 | 27.60 | 0.99 |
| 4 | R | 27.05 | 27.60 | 0.98 |
| | L | 27.40 | 27.70 | 0.99 |
| 5 | R | 27.30 | 27.70 | 0.99 |
| | L | 27.20 | 27.70 | 0.98 |
| 6 | R | 27.00 | 27.65 | 0.97 |
| | L | 27.20 | 27.60 | 0.98 |
| 7 | R | 27.15 | 27.60 | 0.98 |
| | L | 27.30 | 27.60 | 0.99 |
| 8 | R | 27.30 | 27.70 | 0.99 |
| | L | 27.20 | 27.60 | 0.98 |
| 9 | R | 27.20 | 27.60 | 0.98 |
| | L | 27.20 | 27.80 | 0.98 |
| 10 | R | 27.15 | 27.65 | 0.98 |
| | L | 27.20 | 27.70 | 0.98 |

As illustrated in Fig. 15, after the mesh 12 is inserted in the ribbon glass, the wired glass 12 is cut along lines 73 apart inwardly from salvages 70. Since the deformation of the mesh 12 is prevented by welding the salvages 70 to the mesh 12, the external appearance of the wired glass can be improved.

### INDUSTRIAL APPLICABILITY

As described above, according to the present invention, the diameter of the wires constituting the mesh is at least 0.30 mm and less than 0.45 mm, and the intersections of the wires are welded, whereby there is no risk that a relative position error is induced between the wires when the mesh is inserted in the ribbon glass, and in the same manner as a conventional wired glass employing a iron mesh, a good cutting property of the wired glass can be obtained.

Further, the contact portions of two wires are preferably melted into each other so that the thickness of the mesh at the intersections becomes from 82 to 97% of the sum of the diameters of the two intercrossed wires, whereby there is little risk of separation of the welded portions and little risk of breaking of the wires.

Further, according to the present invention, by making a plurality of grooves formed on the outer periphery of a rotational cylindrical roll hold the wires (a wire-intercrossed product), the wires can be continuously aligned and conveyed, whereby the relative position of the wires can securely be maintained.

Further, since the cross-sectional shape of each of the grooves is a substantially V-shape, the wires can be held with predetermined intervals.

Further, since a plurality of intersections where the wires are intercrossed are fixed by a spot welding, the wires can securely be fixed.

Further the waving phenomenon can be suppressed, the flatness can be improved, and accordingly, the polishing amount of the surface of the wired glass can be reduced in the polishing step such as single-side continuous polishing method to improve the polishing efficiency.

Further, the mesh is preferably retrieved by a retrieving roll while a predetermined tension is applied to a mesh portion between upper and lower electrode assemblies and the retrieving roll. A flow of the mesh for a wired glass is corrected by a contact means so that the mesh for a wired glass is retrieved after it is passed through a predetermined position with respect to the retrieving roll. And, the contact means functions as a tensioner for absorbing a slack of the mesh for a wired glass, and it separates a first tension applied to the mesh at the upstream side of the contact means from the second tension applied to the mesh at the downstream side. Further, salvages are welded along both end fringes in the width direction of the mesh for a wired glass.

Therefore, a deformation of the meshwork at a portion of the mesh can be prevented from occurring. Further, since loose winding of the mesh by the retrieving roll or uneven winding can be prevented, the mesh can be densely wound around the retrieving roll.

Accordingly, the length of the mesh per roll can be made longer.

Further, the flatness of the glass sheet can be improved, whereby the amount of surface polishing of the wired glass can be reduced in a polishing step such as a single-side continuous polishing method or a double-side continuous polishing method, which can improve the polishing efficiency.

## Claims

1. A wired glass (10) wherein the mesh (12) comprises stainless steel wires (11) crossed one another, wherein intersections (13) of the wires are welded, **characterised in that** the diameter of the wires (11) is within a range of from 0.30 to 0.45 mm.

2. The wired glass according to Claim 1, wherein the thickness of each intersection (13) of the mesh (12) is from 82 to 97% of the sum of diameters of two intercrossed wires (11).

3. The wired glass according to Claim 1 or 2, wherein the wires (11) have an average linear expansion coefficient of at most 14×10⁻⁶/°C at a temperature of from 20 to 700°C and a tensile strength of at most 200 N/mm² at 700°C.

4. The wired glass according to Claim 1, 2 or 3, wherein the wires (11) consist essentially of from 74 to 83 % of Fe, from 0.2 to 8 % of Ni, from 16 to 25 % of Cr, from 0.5 to 2 % of Mn and from 0 to 3 % of Mo represented by mass percentage.

5. A process for continuously producing a mesh (12) for a wired glass (10), said mesh (12) comprising stainless steel wires (11) crossed one another, said process comprising crossing wires (11) to obtain a wire-intercrossed product (14) ; conveying said wire-intercrossed product (14), and welding intersections (13) of the conveyed wire-intercrossed product (14), **characterised in that** :
the diameter of the wires (11) is from 0.30 to 0.45 mm;
said step of conveying said wire-intercrossed product (14) comprises fitting said wire-intercrossed product (14) to grooves (37) of a rotatable cylindrical roll (36) disposed perpendicularly to a direction of continuously producing the mesh (12), said grooves (37) being formed with the same intervals as a mesh size of the mesh (12), in its outer periphery; and rotating said cylindrical roll (36) around its own axis to continuously align and convey said wire-intercrossed product (14) ; and
a conveying speed V₂ of the mesh (12) having welded intersections is controlled to be equal to a conveying speed V₁ of said wire-intercrossed product (14) at said cylindrical roll (36).

6. The process for producing a mesh for a wired glass, according to Claim 5, wherein the width (W1) of each groove (37) at its bottom is from 1.1 to 2 times the diameter of the wires (11) to be fitted, the width (W2) of the groove at its top is at least 2 times the diameter of said wires, and the width of the groove at its other portions is at least 1.1 times the diameter of said wires.

7. The process for producing a mesh for a wired glass, according to Claim 5 or 6, wherein the welding of intersections (13) in said wire-intercrossed product (14) is carried out by means of a spot welding.

8. The process for producing a mesh for a wired glass, according to Claim 5, 6 or 7, wherein the thickness of the welded intersections (13) is from 82 to 97% of the sum of diameters of two intercrossed wires (11).

9. The process for producing a mesh for a wired glass, according to any one of Claims 5 to 8, wherein the wires (11) have an average linear expansion coefficient of at most 14×10⁻⁶/°C at a temperature of from 20 to 700°C and a tensile strength of at most 200 N/mm² at 700°C.

10. The process for producing a mesh for a wired glass, according to any one of Claims 5 to 9, wherein the wires consist essentially of from 74 to 83 % of Fe, from 0.2 to 8 % of Ni, from 16 to 25 % of Cr, from 0.5 to 2 % of Mn and from 0 to 3 of Mo represented by mass percentage.

11. The process for producing a mesh for a wired glass, according to any one of claims 5 to 10, wherein the mesh (12) having welded intersections is retrieved by a retrieving roll (34), and the rotation of said retrieving roll (34) is controlled so that the retrieving length of the mesh from the time when said V₁ is 0, is equal to the moving distance in a circumferential direction of the cylindrical roll (36) from the circumferential position when V₁ is 0.

12. The process for producing a mesh for a wired glass, according to any one of claims 5 to 10, wherein the mesh (12) having welded intersections is retrieved by a retrieving roll (34), and said mesh (12) is pulled by the retrieving roll (34) to an extent that V₂ stays 0, when V₁ is 0.

13. The process for producing a mesh for a wired glass, according to any one of claim 5 to 10, wherein said mesh (12) is applied with a constant tension.

14. The process for producing a mesh for a wired glass, according to Claim 13, wherein the mesh (12) is retrieved through a tensioner (55).

15. The process for producing a mesh for a wired glass, according to Claim 14, wherein the tensioner (55) has a vertically movable rotational roller (59) in contact with the mesh, and the vertical position of the roller (59) is controlled to suppress a slack of the mesh.

## Patentansprüche

1. Drahtglas bzw. Glas mit Drahtgeflechteinlage (10), wobei das Geflecht (12) rostfreie Stahldrähte (11), welche einander kreuzen, umfaßt, wobei Schnittpunkte (13) der Drähte geschweißt sind, **dadurch gekennzeichnet, daß** der Durchmesser der Drähte (11) innerhalb eines Bereiches von 0,30 bis 0,45 mm ist.

2. Drahtglas nach Anspruch 1, wobei die Dicke jedes Schnittpunktes (13) des Geflechts (12) von 82 bis 97% der Summe der Durchmesser der zwei gekreuzten Drähte (11) beträgt.

3. Drahtglas nach Anspruch 1 oder 2, wobei die Drähte (11) einen mittleren linearen Expansionskoeffizienten von höchstens 14×10⁻⁶/°C bei einer Temperatur von 20 bis 700°C und eine Zugfestigkeit von höchstens 200 N/mm² bei 700°C aufweisen.

4. Drahtglas nach Anspruch 1, 2 oder 3, wobei die Drähte (11) im wesentlichen aus von 74 bis 83% Fe, von 0,2 bis 8% Ni, von 16 bis 25% Cr, von 0,5 bis 2% Mn und von 0 bis 3% Mo, dargestellt durch Masse-%, bestehen.

5. Verfahren zum kontinuierlichen Herstellen eines Geflechts (12) für ein Drahtglas (10), wobei das Geflecht (12) rostfreie Stahldrähte (11), welche einander kreuzen, umfaßt, wobei das Verfahren das Kreuzen von Drähten (11), um ein Draht-gekreuztes Produkt (14) zu erhalten, das Transportieren des Draht-gekreuzten Produktes (14), und das Schweißen der Schnittpunkte (13) des transportierten Draht-gekreuzten Produktes (14) umfaßt, **dadurch gekennzeichnet, daß** der Durchmesser der Drähte (11) von 0,30 bis 0,45 mm beträgt, wobei der Schritt des Transportierens des Draht-gekreuzten Produktes (14) das Anpassen des Draht-gekreuzten Produktes (14) an Führungsrillen (37) einer rotierbaren zylindrischen Walze (36), welche orthogonal zu einer Richtung des kontinuierlichen Herstellens des Geflechts (12) angeordnet ist, wobei die Führungsrillen (37) mit den gleichen Intervallen wie eine Maschenweite des Geflechts (12) in dessen äußerer Peripherie gebildet sind, und
das Rotieren der zylindrischen Walze (36) um deren eigene Achse, um das Draht-gekreuzte Produkt (14) kontinuierlich auszurichten und zu transportieren, umfaßt, und
eine Transportgeschwindigkeit V₂ des Geflechts (12) mit geschweißten Schnittpunkten kontrolliert ist, um gleich einer Transportgeschwindigkeit V₁ des Draht-gekreuzten Produktes (14) an der zylindrischen Walze (36) zu sein.

6. Verfahren zum Herstellen eines Geflechts für ein Drahtglas nach Anspruch 5, wobei die Breite (W1) jeder Führungsrille (37) an deren Boden vom 1,1- bis 2-fachen des Durchmessers der anzupassenden Drähte (11) beträgt, die Breite (W2) der Führungsrille an deren Spitze mindestens das 2-fache des Durchmessers der Drähte beträgt, und die Breite der Führungsrille an deren anderen Bereichen mindestens das 1,1-fache des Durchmessers der Drähte beträgt.

7. Verfahren zum Herstellen eines Geflechts für ein Drahtglas nach Anspruch 5 oder 6, wobei das Schweißen der Schnittpunkte (13) des Draht-gekreuzten Produktes (14) durch Mittel eines Punktschweißens durchgeführt wird.

8. Verfahren zum Herstellen eines Geflechts für ein Drahtglas nach Anspruch 5, 6 oder 7, wobei die Dicke der geschweißten Schnittpunkte (13) von 82 bis 97% der Summe der Durchmesser der zwei gekreuzten Drähte (11) beträgt.

9. Verfahren zum Herstellen eines Geflechts für ein Drahtglas nach einem der Ansprüche 5 bis 8, wobei die Drähte (11) einen mittleren linearen Expansionskoeffizienten von höchstens 14×10⁻⁶/°C bei einer Temperatur von 20 bis 700°C und eine Zugfestigkeit von höchstens 200 N/mm² bei 700°C aufweisen.

10. Verfahren zum Herstellen eines Geflechts für ein Drahtglas nach einem der Ansprüche 5 bis 9, wobei die Drähte (11) im wesentlichen aus von 74 bis 83% Fe, von 0,2 bis 8% Ni, von 16 bis 25% Cr, von 0,5 bis 2% von Mn und von 0 bis 3% Mo, dargestellt durch Masse-%, bestehen.

11. Verfahren zum Herstellen eines Geflechts für ein Drahtglas nach einem der Ansprüche 5 bis 10, wobei das Geflecht (12) mit geschweißten Schnittpunkten durch eine Rückführ- bzw. Wiedergewinnungswalze (34) rückgeführt wird, und die Rotation der Rückführwalze (34) derart kontrolliert wird, daß die Rückführlänge des Geflechts von dem Zeitpunkt, wenn V₁ 0 ist, gleich der Bewegungsentfernung in einer Umfangsrichtung der zylindrischen Walze (36) von der Umfangsposition, wenn V₁ 0 ist, ist.

12. Verfahren zum Herstellen eines Geflechts für ein Drahtglas nach einem der Ansprüche 5 bis 10, wobei das Geflecht (12) mit geschweißten Schnittpunkten durch eine Rückführwalze (34) rückgeführt wird, und das Geflecht (12) durch die Rückführwalze (34) zu einem Ausmaß gezogen wird, daß V₂ 0 bleibt, wenn V₁ 0 ist.

13. Verfahren zum Herstellen eines Geflechts für ein Drahtglas nach einem der Ansprüche 5 bis 10, wobei das Geflecht (12) mit einer konstanten Spannung angewendet wird.

14. Verfahren zum Herstellen eines Geflechts für ein Drahtglas nach Anspruch 13, wobei das Geflecht (12) durch ein Spannelement (55) rückgeführt wird.

15. Verfahren zum Herstellen eines Geflechts für ein Drahtglas nach Anspruch 14, wobei das Spannelement (55) eine vertikal bewegliche Rotationswelle (59) in Kontakt mit dem Geflecht aufweist, und die vertikale Position der Welle (59) kontrolliert wird, um einen Durchhang des Geflechts zu unterdrücken.

## Revendications

1. Verre armé (10) dans lequel le treillis (12) comprend des fils en acier inoxydable (11) se croisant les uns les autres, les intersections (13) des fils étant soudées, **caractérisé en ce que** le diamètre des fils (11) est dans une plage de 0,30 à 0,45 mm.

2. Verre armé selon la revendication 1, dans lequel l'épaisseur de chaque intersection (13) du treillis (12) est de 82 à 97 % de la somme des diamètres de deux fils entrecroisés (11).

3. Verre armé selon la revendication 1 ou 2, dans lequel les fils (11) ont un coefficient de dilatation linéaire moyen d'au plus 14 × 10⁻⁶/°C à une température allant de 20 à 700°C, et une résistance à la traction d'au plus 200 N/mm² à 700°C.

4. Verre armé selon la revendication 1, 2 ou 3, dans lequel les fils (11) sont constitués essentiellement de 74 à 83 % de Fe, de 0,2 à 8 % de Ni, de 16 à 25 % de Cr, de 0,5 à 2 % de Mn et de 0 à 3 % de Mo, ces valeurs étant en pourcentage en masse.

5. Procédé pour produire en continu un treillis (12) pour un verre armé, ledit treillis (12) comprenant des fils en acier inoxydable (11) se croisant les uns les autres, procédé comprenant le croisement de fils (11) pour obtenir un produit de fils entrecroisés (14) ; le transport dudit produit de fils entrecroisés (14), et le soudage des intersections (13) du produit de fils entrecroisés transporté (14), **caractérisé en ce que** :
le diamètre des fils (11) est de 0,30 à 0,45 mm ;
ladite étape de transport dudit produit de fils entrecroisés (14) comprend l'ajustement dudit produit de fils entrecroisés (14) à des rainures (37) d'un rouleau cylindrique rotatif (34) disposé perpendiculairement à une direction de production en continu du treillis (12), lesdites rainures (37) étant formées à des intervalles égaux à une taille de maille du treillis (12), dans sa périphérie extérieure ; et
la mise en rotation dudit rouleau cylindrique (36) sur son propre axe pour aligner et transporter en continu ledit produit de fils entrecroisés (14); et
une vitesse de transport V₂ du treillis (12) ayant des intersections soudées est commandée pour être égale à une vitesse de transport V₁ dudit produit de fils entrecroisés (14) au niveau dudit rouleau cylindrique (30).

6. Procédé pour produire un treillis pour un verre armé selon la revendication 5, dans lequel la largeur (W1) de chaque rainure (37) au niveau de son fond est 1,1 à 2 fois égale au diamètre des fils (11) devant être ajustés, la largeur (W2) de la rainure au niveau de sa partie supérieure est au moins 2 fois égale au diamètre desdits fils, et la largeur de la rainure au niveau de ses autres parties est au moins 1,1 fois égale au diamètre desdits fils.

7. Procédé pour produire un treillis pour un verre armé selon la revendication 5 ou 6, dans lequel le soudage des intersections (13) dans ledit produit de fils entrecroisés (14) est réalisé par l'intermédiaire d'un soudage par points.

8. Procédé pour produire un treillis pour un verre armé selon la revendication 5, 6 ou 7, dans lequel l'épaisseur des intersections soudées (13) est de 82 à 97 % de la somme des diamètres de deux fils entrecroisés (11).

9. Procédé pour produire un treillis pour un verre armé selon l'une quelconque des revendications 5 à 8, dans lequel les fils (11) ont un coefficient de dilatation linéaire moyen d'au plus 14 × 10⁻⁶/°C à une température allant de 20 à 700°C, et une résistance à la traction d'au plus 200 N/mm² à 700°C.

10. Procédé pour produire un treillis pour un verre armé selon l'une quelconque des revendications 5 à 9, dans lequel les fils (11) sont constitués essentiellement de 74 à 83 % de Fe, de 0,2 à 8 % de Ni, de 16 à 25 % de Cr, de 0,5 à 2 % de Mn et de 0 à 3 % de Mo, ces valeurs étant en pourcentage en masse.

11. Procédé pour produire un treillis pour un verre armé selon l'une quelconque des revendications 5 à 10, dans lequel le treillis (12) ayant des intersections soudées est récupéré par un rouleau de récupération (34), et la rotation dudit rouleau de récupération est commandée pour que la longueur de récupération du treillis à partir du moment où ladite V₁ est 0 soit égale à la distance de déplacement dans une direction circonférentielle du rouleau cylindrique (36) à partir de la position circonférentielle lorsque V₁ est 0.

12. Procédé pour produire un treillis pour un verre armé selon l'une quelconque des revendications 5 à 10, dans lequel le treillis (12) ayant des intersections soudées est récupéré par un rouleau de récupération (34), et ledit treillis (12) est tiré par le rouleau de récupération (34) à un point tel que V₂ reste égale à 0 lorsque V₁ est égale à 0.

13. Procédé pour produire un treillis pour un verre armé selon l'une quelconque des revendications 5 à 10, dans lequel ledit treillis (12) est appliqué avec une tension constante.

14. Procédé pour produire un treillis pour un verre armé selon la revendication 13, dans lequel le treillis (12) est récupéré par l'intermédiaire d'un dispositif de tension (55).

15. Procédé pour produire un treillis pour un verre armé selon la revendication 14, dans lequel le dispositif de tension (55) possède un rouleau rotatif mobile verticalement (59) en contact avec le treillis, la position verticale du rouleau (59) étant contrôlée pour supprimer un jeu du treillis.
